# EUROPEAN PATENT SPECIFICATION

(11) **EP 1 095 554 B1**
(45) Date of publication and mention of the grant of the patent: **26.11.2003**
(21) Application number: 99830681.5
(22) Date of filing: 28.10.1999
(51) Int. Cl.: A01D 46/26

(54) **Tree shaking device for collecting fruits**
Baumschüttler zum Sammeln von Früchten
Dispositif pour secouer les arbres pour la collecte de fruits

(43) Date of publication of application: 02.05.2001
(60) Divisional application: 02023069.4
(73) Proprietor: Active S.R.L., 26037 S.Giovanni in Croce (CR) (IT)
(72) Inventor: Griffini, Alberto, 26034 Pontirolo (IT); Buoli, Giorgio, 26040 Gussola (CR) (IT)
(74) Representative: Robba, Pierpaolo

(56) References cited:
- EP-A- 0 906 721
- WO-A-99/07203
- WO-A-99/21410
- ES-A- 2 021 986

## Description

The present invention relates to a tree shaking device for collecting fruits.

In particular, the invention is advantageously employed for harvesting fruits from trees such as olives, walnuts, hazelnuts and so on. Prior art devices of this type are for instance known from US-A-3 457 713 and US-A-4 873 820.

The devices of this type comprise a rod equipped at its end with a hook for engaging a branch of a tree, this rod being partially contained within a housing and receiving a reciprocating motion through an eccentric kinematic mechanism, which in turn transforms a rotatory motion of a motor into a reciprocating motion.

An eccentric arm, through a connecting rod, imparts a reciprocating motion to the rod carrying the hook with a stroke of about 60 mm. When the hook engages the single branches of a tree the rod transmits the reciprocating motion to the branches shaking them and causing the fruits to fall from the tree.

A drawback of these known shaking devices derives from the remarkable oscillatory stresses transmitted to the user who bears and controls the device.

In fact, in use the hook is connected to the branch and the machine is driven in a reciprocating motion according to the direction of the rod with a displacement that can reach the maximum stroke generated by the eccentric.

There have been proposed tree shaking devices with particular improvements to make more comfortable the use of the machine.

In particular EP-A-906 721 describes a tree shaking device comprising a housing that contains an eccentric kinematic mechanism; a rod partially housed within said housing and movable with a reciprocating motion generated by the eccentric kinematic mechanism which transforms the rotary motion of a motor into a reciprocating motion, and equipped at its free end with a hook; grip means comprising a main tubular handle partially enclosing said rod, and an auxiliary tubular handgrip secured to the housing and axially movable along a tubular body which is parallel to the rod.

The device disclosed in the above European patent application provides for a first helical spring coaxially inserted between the main tubular handgrip and the oscillating rod, and a second helical spring coaxially inserted between the auxiliary tubular handgrip and the tubular body.

However in such an arrangement, also the protection - to which is fastened on one hand the spring of the main handgrip - is moving in a reciprocating motion since it is fastened to the reduction gearbox, and therefore also the sleeve, fastened on the other hand to the spring, is nevertheless moving with a reciprocating motion.

It is therefore an object of the present invention to provide an improved tree shaking device whose employment results more comfortable for the user.

According to the invention, these objects are achieved through a tree shaking device as claimed in claim 1. Further advantageous characteristics are recited in the dependent claims.

In the tree shaking device according to the invention, the handgrip is free to slide without hindrance (preferably in the axial direction) along the protection and therefore no reaction force is transmitted to the operator's hand and the use of the machine is more comfortable.

The present invention will now be disclosed with reference to the accompanying drawings illustrating preferred but not limiting embodiments of the invention, in which:
Figure 1 is a perspective view of a shaking device according to the invention, during the use;
Figure 2 is a perspective view of the harness attached to a tree shaking device according to the invention;
Figure 3 is a perspective view illustrating with more details the front grip sleeve of a device according to the invention;
Figure 4 illustrates another embodiment of the grip sleeve;
Figure 5 is a longitudinal sectional view of a tree shaking device according to the invention;
Figure 6 is a perspective view illustrating with more details the housing and the rear grip sleeve of a device according to the invention;
Figure 7 shows a detail of the shaking hook;
Figure 8 illustrates with greater details the thrust-supporting hook of the shaker harness.

Throughout all the Figures the same reference numerals are used to indicate similar or substantially corresponding parts.

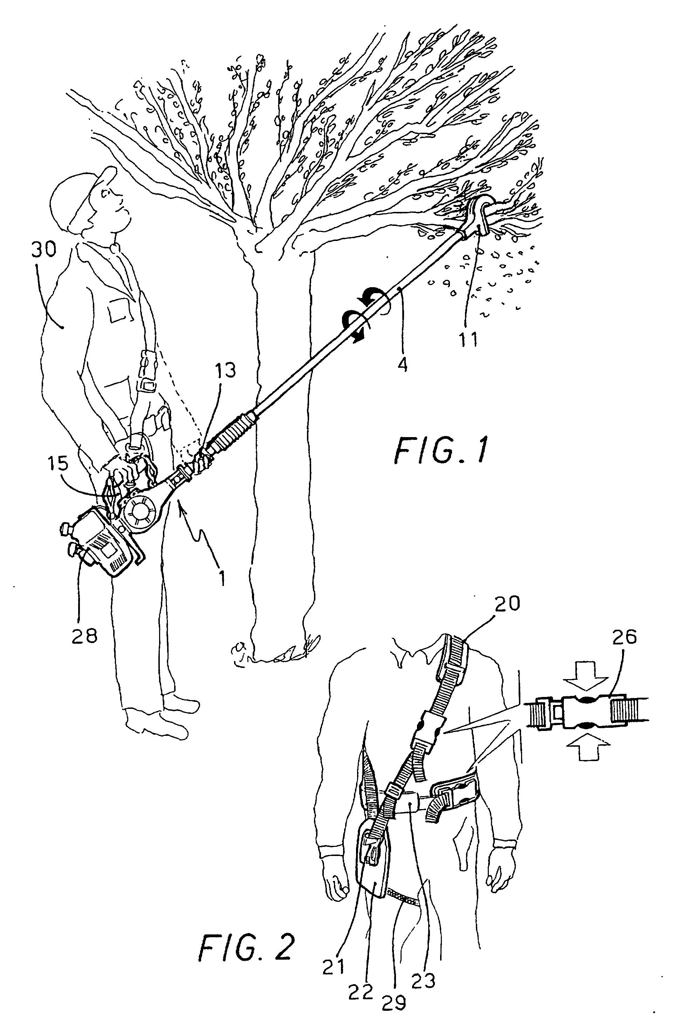

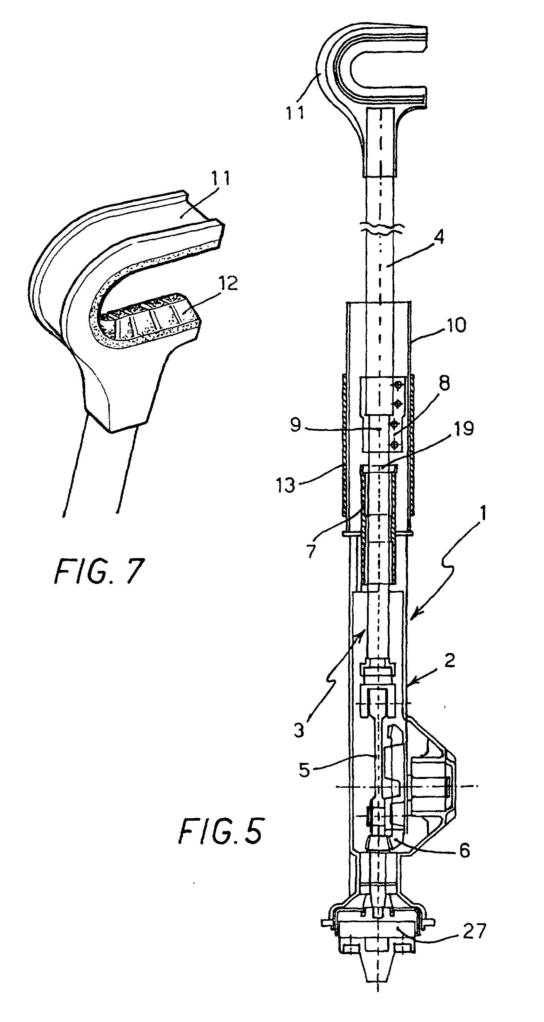

Firstly with reference to Figures 1 and 5, a shaking device 1 according to the invention comprises a body or housing 2 containing an eccentric kinematic mechanism 3, a driving rod 9 partially located within said housing and movable with a reciprocating motion imparted by said eccentric kinematic mechanism, the driving rod being connected to the mechanism through a connecting rod 5.

The rod 9 is partially housed in the housing 2 and, through a connecting sleeve or coupling 8, is connected to an end rod 4 carrying a hook 11 to engage the branches of a tree for collecting fruits therefrom.

The rod 9 is preferably of rectified steel, while the terminal rod 4 is preferably of a light alloy. The coupling 8 is provided with a longitudinal slot and four fastening screws 25 that allow to disassemble the rod 4, in particular for transporting it inside of a vehicle.

The rod 9 slides within two bronze bushings 7, placed at a certain distance from each other to increase the guiding action of the rod 9, and a sealing ring 19 is fitted at the end of the farther bronze bushing to prevent leakages of the lubricating oil contained in the box 2. Alternatively, a single bronze bushing of appropriate length can be provided for. The hook 11, illustrated with greater details in Figure 7 is equipped with a rubber protection 12 to avoid damaging the branches.

With reference in particular to Figure 5, the rod 9, driven by bronze bushings 7 reciprocates thanks to the eccentric kinematic mechanism 3 which comprises a connecting rod 5 fastened to the inner end of rod 9 and a bevel gear pair 6 receiving the rotary motion of a motor 28 through a clutch 27, and transforms it into a reciprocating motion. The bevel gear pair is equipped with a counterweight 11 to compensate the different weight of the parts.

As illustrated with more details in Figures 2-4 and 6, the device 1 is carried and controlled by a user 30 through the front gripping means 13 and the rear gripping means 15.

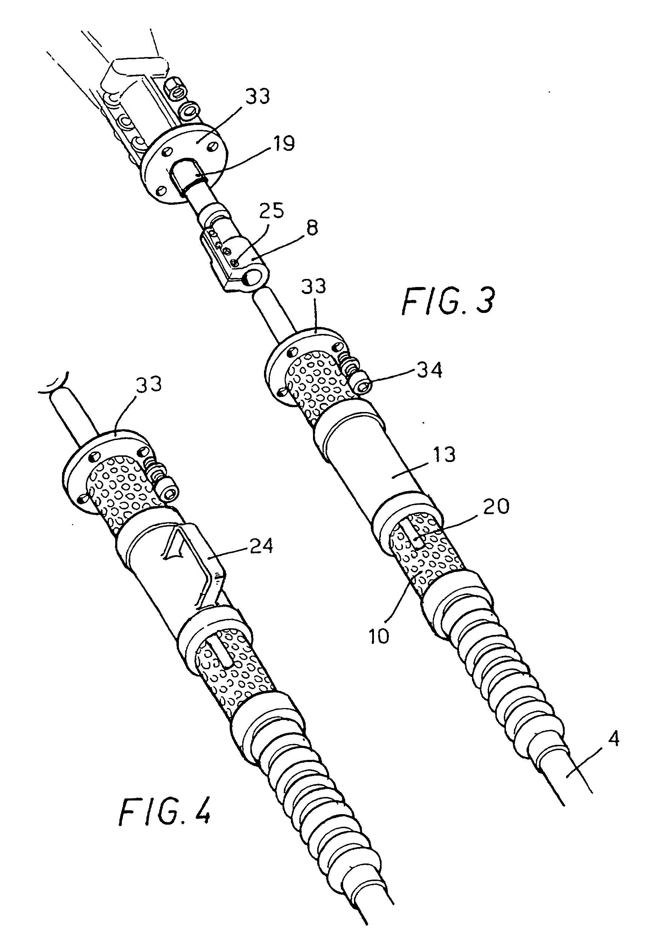

The tree shaking device further comprises a tubular protection 10 consisting of a tubular element preferably perforated to be lighter. The protection 10 is fastened and made integral to the body 2 through flanges 33 and screws 34, and partially encloses the rods 4 and 9. The tubular element 10 is further equipped with suitable openings (slots or holes in Figure 3) that allow the passage of a wrench to screw or unscrew the screws 25, for engaging or disengaging respectively the rod 4 from the sleeve 8.

Over the tubular protection 10 a main handgrip 13 shaped as a sleeve is axially slidable. Such a sleeve is preferably made of a plastic material adapted to reduce the friction over the protection tube 10, while the outer portion gripped by the operator's hand is coated with a rubber layer.

In the shaking device according to the invention, the sleeve 13 (Figure 3) which forms the front handgrip is freely slidable (preferably in axial direction) over the protection 10, without hindrance, and therefore no reaction force is transmitted to the operator's hand by whereby a more comfortable use of machine is allowed.

According to another embodiment of the invention illustrated in Figure 4, to the sleeve 13 is fastened a handle 24 for a better gripping by the user. The sleeve 13 can be provided with a longitudinal guide on the protection 10 to prevent the handgrip 24 from rotating because of its weight.

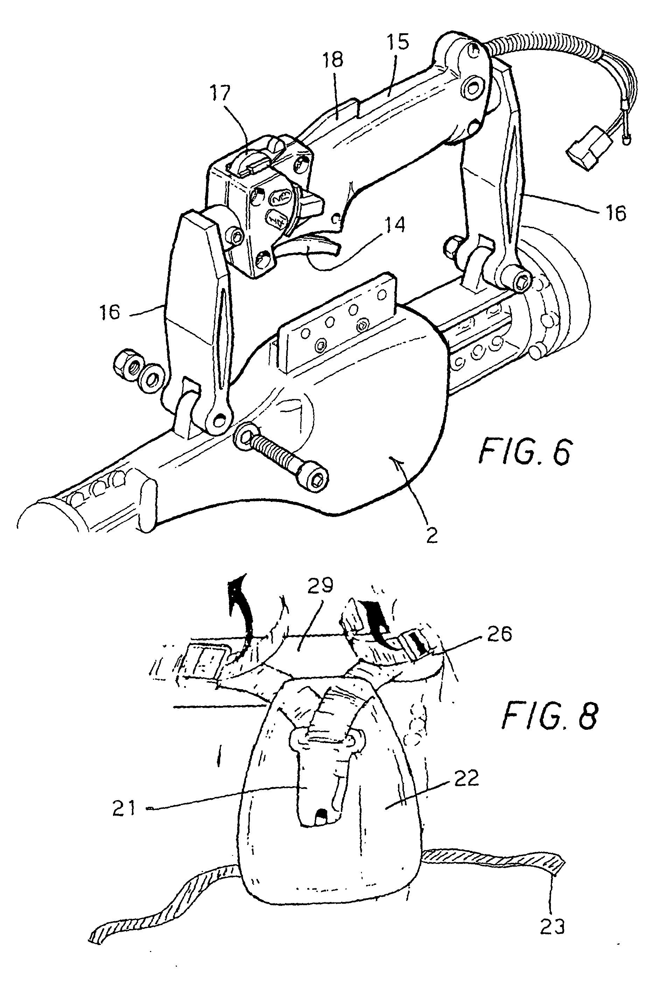

As illustrated with more details in Figure 6, in addition to the front (slidable) handgrip 13, the shaking device 1 is also equipped with a rear handgrip 15 carrying the controls for governing the motor, such as an accelerator 14, a stop switch 17 and a safety lever 18.

The rear handgrip 15 is connected elastically to the body 2 through particular dampers 16, preferably of rhomboidal shape, and has the task to partially support the machine and to direct it during the operation.

Moreover the dampers 16 allow to move transversally the handgrip 15 in order to prevent the contact with the hip of operator 30.

Supporting the weight of the shaking device is an important aspect in the use of the machine and according to the invention it is carried out by a special and ergonomic harness or sling illustrated in Figures 2 and 8. The harness according to the invention comprises a padded belt 29 which is connected to a transversal shoulder-strap 20 and discharges onto the pelvis through the hook 21 - carried by a hip protection 26 - nearly all the weight of the shaking device, thus letting the spine free from weights and vibrations. The belt and the shoulder-strap are provided with buckles of known type 26 for properly adjusting their lengths.

The hip protection 22 which carries the hook 21 is fastened to the leg through the belt 23, and has the task to protect the hip and the leg of the operator from the unavoidable rubbing of box 2 of the shaking device during its reciprocating motion.

Although the invention has been illustrated with reference to preferred embodiments thereof, it is generally subjected to other applications and modifications which fall within the scope of the invention as will be evident to the skilled of the art.

## Claims

1. Tree shaking device for collecting fruits from trees, comprising:
a housing (2) containing an eccentric kinematic mechanism (3);
a rod (4) partially housed within said housing (2) and movable with a reciprocating motion imparted by said eccentric kinematic mechanism (3) which transforms the rotary motion of a motor into a reciprocating motion, said rod (4) being equipped at its free end with a hook (11), a tubular protection (10) fastened to said housing being further provided around said movable rod (4);
grip means comprising a front tubular handgrip (13) partially enclosing said movable rod (4), and a rear handgrip (15);
**characterised in that** said front handgrip (13) is slidable without hindrance over said protection (10).

2. Tree shaking device as claimed in claim 1, **characterised in that** said front handgrip (13) is freely slidable along the axial direction on said protection (10) which is fastened through flanges and screws (33, 34) to said housing (2) .

3. Tree shaking device as claimed in claims 1 or 2, **characterised in that** said front handgrip is formed of a low-friction plastic material, while the outer portion gripped by the operator's hand is coated by a rubber layer.

4. Tree shaking device as claimed in the preceding claims, **characterised in that** said movable rod (4) equipped with a hook (11) is connected through a sleeve (8) to one end of a driving rod (9) having the other end connected to said eccentric kinematic mechanism (3).

5. Tree shaking device as claimed in the preceding claims, **characterised in that** said handgrip (13) is formed as a sleeve.

6. Tree shaking device as claimed in claim 5, **characterised in that** a handle (24) for a better grip is fastened to said sleeve (13).

7. Tree shaking device as claimed in the preceding claims, **characterised in that** said driving rod (9) is slidable within at least a guide bronze bushing (7).

8. Tree shaking device as claimed in the preceding claims, **characterised in that** said rear handgrip (15) is elastically connected to said housing (2) through dampers (16) that allow a transversal motion of the handgrip 15 in order to prevent the contact with the operator's hip (30).

9. Tree shaking device as claimed in claim 8, **characterised in that** said dampers (16) have a rhomboidal shape.

10. Tree shaking device as claimed in the preceding claims, **characterised in that** said tubular protection element (10) is equipped with openings which allow the passage of a wrench to engage or disengage said movable rod (4) from said coupling (8).

11. Tree shaking device as claimed in the preceding claims, **characterised in that** it comprises a harness comprising a padded belt (29), connected to a transversal shoulder-strap (20), and a hip protection plate (22) that can be secured to the operator's leg (30) to discharge onto the user's pelvis, through a hook (21) on said plate, the weight of said tree shaking device and to prevent the body (2) from rubbing the operator's leg.

## Patentansprüche

1. Baumschüttler zum Sammeln von Baumfrüchten, mit
- einem ein Exzentergetriebe (3) enthaltenden Gehäuse (2) ;
- einer teilweise im Gehäuse (2) angeordneten Stange (4), auf die die durch das Exzentergetriebe (3) in Hin- und Herbewegung umgesetzte Drehbewegung eines Motors übertragen wird, wobei die Stange (4) an ihrem freien Ende einen Haken (11) aufweist und am Gehäuse ausserdem ein die bewegliche Stange (4) umgebendes Schutzrohr (10) befestigt ist;
- Greifmitteln, die aus einem stirnseitigen rohrförmigen Griff (13), der die bewegliche Stange (4) teilweise umgibt, und einem rückwärtigen Griff (15) bestehen;
**dadurch gekennzeichnet, dass** der stirnseitige Griff (13) über das Schutzröhr (10) unbehindert verschiebbar ist.

2. Baumschüttler nach Anspruch 1, **dadurch gekennzeichnet, dass** der stirnseitige Griff (13) auf das Schutzrohr (10) in Axialrichtung frei verschiebbar ist, das über Flansche und Schrauben (33, 34) am Gehäuse (2) befestigt ist.

3. Baumschüttler nach Anspruch 1 oder 2, **dadurch gekennzeichnet, dass** der stirnseitige Griff aus einem reibungsarmen Kunststoff hergestellt ist, während der äussere, vom Benutzer mit der Hand gehaltene Abschnitt mit einer Gummischicht überzogen ist.

4. Baumschüttler nach den vorstehenden Ansprüchen, **dadurch gekennzeichnet, dass** die mit dem Haken (11) versehene bewegliche Stange (4) über eine Hülse (8) mit dem einen Ende einer Antriebsstange (9) verbunden ist, die mit ihrem anderen Ende mit dem Exzentergetriebe (3) verbunden ist.

5. Baumschüttler nach den vorstehenden Ansprüchen, **dadurch gekennzeichnet, dass** der Griff (13) die Form einer Hülse hat.

6. Baumschüttler nach Anspruch 5, **dadurch gekennzeichnet, dass** an der Hülse (13) ein Henkel (24) befestigt ist, um das Zupacken der Hand zu erleichtern.

7. Baumschüttler nach den vorstehenden Ansprüchen, **dadurch gekennzeichnet, dass** die Antriebsstange (9) in wenigstens einem Führungsbronzelager (7) verschiebbar gelagert ist.

8. Baumschüttler nach den vorstehenden Ansprüchen, **dadurch gekennzeichnet, dass** der rückwärtige Griff (15) mit dem Gehäuse (2) über Dämpfer (16) elastisch verbunden ist, die eine Querbewegung des Griffs (15) ermöglichen, um eine Berührung mit der Hüfte (30) des Benutzers zu verhindern.

9. Baumschüttler nach Anspruch 8, **dadurch gekennzeichnet, dass** die Dämpfer (16) die Form eines Rhomboids haben.

10. Baumschüttler nach den vorstehenden Ansprüchen, **dadurch gekennzeichnet, dass** das Schutzrohr (10) Öffnungen aufweist, durch die ein Schrauben-schlüssel eingeführt werden kann, um die Verbindung der beweglichen Stange (4) mit der Hülse (8) zu lösen oder herzustellen.

11. Baumschüttler nach den vorstehenden Ansprüchen, **dadurch gekennzeichnet, dass** die Ausstattung desselben ein gepolstertes Gurt (29), das mit einem Schulterriemen (20) verbunden ist, und eine Hüftenschutzplatte (22) umfasst, die am Bein (30) des Benutzers befestigt werden kann, um über einen Haken (21) der genannten Platte das Gewicht des Baumschüttlers auf das Becken des Benutzers zu verlagern und eine Reibung des Gehäuses (2) gegen das Bein des Benutzers zu verhindern.

## Revendications

1. Dispositif pour secouer les arbres pour la collecte de fruits des arbres, comportant:
une carcasse (2) contenant un mécanisme cinématique excentrique (3);
une tige (4) partiellement logée dans ladite carcasse (2) et mobile avec un mouvement alternatif donné par ledit mécanisme cinématique excentrique (3) qui transforme le mouvement rotatif d'un moteur dans un mouvement alternatif, ladite tige (4) étant équipée à son extrémité libre avec un crochet (11), une protection tubulaire (10) fixée à ladite carcasse étant en outre prévue autour de ladite tige mobile (4);
des moyens de prise comprenant une poignée tubulaire antérieure (13), qui renferme partiellement ladite tige mobile (4), et une poignée postérieure (15);
**caractérisé en ce que** ladite poignée antérieure (13) peut glisser sans empêchements sur ladite protection (10).

2. Dispositif pour secouer les arbres selon la revendication 1, **caractérisé en ce que** ladite poignée antérieure (13) peut glisser librement le long de la direction axiale sur ladite protection (10), qui est fixée par brides et vis (33, 34) à ladite carcasse.

3. Dispositif pour secouer les arbres selon la revendication 1 ou 2, **caractérisé en ce que** ladite poignée antérieure est réalisée en matériau plastique à faible friction, pendant que la portion externe saisie par la main de l'opérateur est revêtue par une couche de caoutchouc.

4. Dispositif pour secouer les arbres selon les revendications précédentes, **caractérisé en ce que** ladite tige mobile (4) munie d'un crochet (11) est reliée par un manchon (8) à une extrémité d'une tige motrice (9), dont l'autre extrémité est reliée audit mécanisme cinématique excentrique (3).

5. Dispositif pour secouer les arbres selon les revendications précédentes, **caractérisé en ce que** ladite poignée est en forme de manchon.

6. Dispositif pour secouer les arbres selon la revendication 5, **caractérisé en ce que** une manche (24) pour une meilleure prise est fixée audit manchon (13).

7. Dispositif pour secouer les arbres selon les revendications précédentes, **caractérisé en ce que** ladite tige motrice (9),peut glisser à l'intérieur d'au moins un coussinet de guidage en bronze (7).

8. Dispositif pour secouer les arbres selon les revendications précédentes, **caractérisé en ce que** ladite poignée postérieure (15) est reliée de manière élastique à ladite carcasse (2) par des amortisseurs (16) permettant un mouvement transversal de la poignée. (15) afin d'empêcher le contact avec les hanches de l'opérateur.

9. Dispositif pour secouer les arbres selon la revendication 8, **caractérisé en ce que** lesdits amortisseurs (16) sont de forme rhomboïdale.

10. Dispositif pour secouer les arbres selon les revendications précédentes, **caractérisé en ce que** ledit élément de protection tubulaire (10) est muni d'ouvertures permettant le passage d'une clef pour engager ou désengager ladite tige mobile (4) dudit joint (8).

11. Dispositif pour secouer les arbres selon les revendications précédentes, **caractérisé en ce que** il comporte un harnais comprenant une ceinture rembourrée (29), reliée à une bretelle transversale (20), et une plaque de protection des hanches (22) pouvant être assurée à la jambe de l'utilisateur (30) pour décharger le poids dudit dispositif pour secouer les arbres sur le bassin de l'opérateur, par un crochet (21) sur ladite plaque, et pour empêcher que le corps (2) frotte la jambe de l'opérateur.
